# EUROPÄISCHE PATENTSCHRIFT

(11) **EP 3 241 599 B1**
(45) Veröffentlichungstag und Bekanntmachung des Hinweises auf die Patenterteilung: **16.07.2025**
(21) Anmeldenummer: 16168143.2
(22) Anmeldetag: 03.05.2016
(51) Int. Cl.: B01D 29/05, B01D 29/66, B01D 29/86

(54) **VERFAHREN ZUM TRENNEN EINER SUSPENSION MITTELS EINER QUERSTROMFILTRATION IN EIN KONZENTRAT UND EIN FILTRAT**
METHOD FOR SEPARATION OF A SUSPENSION BY MEANS OF A CROSS-FLOW FILTRATION INTO A CONCENTRATE AND A FILTRATE
PROCEDE DE SEPARATION D'UNE SUSPENSION A L'AIDE D'UNE FILTRATION D'ECOULEMENT TRANSVERSAL DANS UN CONCENTRE ET PRODUIT DE FILTRAGE

(43) Veröffentlichungstag der Anmeldung: 08.11.2017
(73) Patentinhaber: BOKELA GmbH, 76131 Karlsruhe (DE)
(72) Erfinder: Ehrfeld, Egon, 76227 Karlsruhe (DE); Neumaier, Klaus, 76275 Ettlingen (DE); Priwitzer, Hans-Jürgen, 67063 Ludwigshafen (DE); Bott, Reinhard, 76337 Waldbronn (DE)
(74) Vertreter: Wunderlich & Heim Patentanwälte PartG mbB

(56) Entgegenhaltungen:
- EP-A1- 1 057 512
- WO-A1-03/008067
- DE-A1- 102007 038 828
- US-A- 5 228 987
- US-B1- 6 332 977

## Beschreibung

Die Erfindung betrifft ein Verfahren zum Trennen einer Suspension mittels einer Querstromfiltration in ein Konzentrat und ein Filtrat gemäß dem Oberbegriff des Anspruchs 1.

Bei einem solchen Verfahren wird die Suspension in einen Suspensionsraum mit mehreren, in Serie angeordneten kammerartigen Modulen eingeleitet, in welchen jeweils mindestens ein ringförmiges Trennelement mit einer Trennfläche vorgesehen ist, in jedem Modul zumindest ein Rührglied mit radial angeordneten Rührelementen in dem Suspensionsraum in einem geringen Abstand über die Trennfläche relativ zu dieser bewegt, so dass in einem Spalt zwischen dem Rührglied und der Trennfläche eine gerichtete Strömung quer zur Trennfläche erzeugt wird, zum Filtrieren ein Differenzdruck zwischen dem Suspensionsraum und einem Filtratraum eingestellt, der sich an einer vom Suspensionsraum abgewandten Seite des Trennelements befindet und Filtrat, welches aufgrund des anliegenden Differenzdrucks das Trennelement durchdringt, über eine Filtratleitung abgeleitet, während die im Suspensionsraum verbliebene Suspension zu einem Konzentrat eingedickt wird, welche aus dem Suspensionsraum über einen Ablauf abgeleitet wird.

Eine geeignete Vorrichtung weist einen Suspensionsraum, welcher mehrere in Serie angeordnete kammerartige Module aufweist, in welchen jeweils mindestens ein ringförmiges Trennelement mit einer Trennfläche und zumindest ein Rührglied mit radial angeordneten Rührelementen angeordnet ist, wobei die Rührelemente ausgebildet sind, in dem Suspensionsraum in einem geringen Abstand über die Trennfläche relativ zu dieser bewegt zu werden, einen Filtratraum, welcher an einer vom Suspensionsraum abgewandten Seite des Trennelements angeordnet ist und in welchen Filtrat aus dem Suspensionsraum durch das Trennelement übertritt und eine Filtratleitung auf, über welche Filtrat, das aus dem Filtratraum ableitbar ist, wobei zwischen dem Suspensionsraum und dem Filtratraum ein Differenzdruck vorgesehen ist.

Ein gattungsgemäßes Verfahren und eine entsprechende Vorrichtung zum Trennen einer Suspension mittels einer Querstromfiltration in ein Konzentrat und ein Filtrat sind beispielsweise aus der EP 1 057 512 A1 bekannt. Bei diesem Verfahren und der entsprechenden Vorrichtung wird eine Suspension in einem Filtrationsraum über mehrere kammerartige Module geleitet, in welchen jeweils mindestens ein Filterelement vorgesehen ist. An dem Filterelement wird ein Differenzdruck angelegt, mittels welchem das Filtrat durch das Filterelement hindurchtritt und anschließend abgeleitet wird.

Insbesondere bei Feinfiltrationen ist es von Interesse, stets eine gleichbleibend hohe Qualität des Filtrats sicherzustellen. Üblicherweise werden sehr feine Polymermembranen dafür eingesetzt, deren Porenweite wesentlich kleiner als die Größe der abzutrennenden Partikel ist. Dadurch wird ein sehr reines Filtrat erzeugt. Doch sind diese Membranen in ihrer Anwendung aufgrund von chemischer Unbeständigkeit, Abrasionsanfälligkeit und Temperaturanfälligkeit eingeschränkt. Ein anwachsender Filterkuchen, sehr feine Partikel oder Verunreinigungen (zum Beispiel sehr große Moleküle) in der Suspension können nach und nach zu einem zunehmenden Filtrationswiderstand führen und das Filterelement kann sich zusetzen, wodurch der Durchsatz an Filtrat merklich reduziert wird. Dies kann, wenn auch in geringerem Maße als bei anderen Filtrationsverfahren, ebenfalls bei der Querstromfiltration von Bedeutung sein. Insbesondere für eine wirtschaftliche Verfahrensführung ist es daher zweckmäßig, eine Reinigung der Filterelemente durchzuführen, was beispielsweise durch eine Umkehr der Druckdifferenz am Filterelement erreicht werden kann. So kann ein Filterkuchen oder Verblockungen im Filterelement, die sich mindernd auf den Filtratdurchsatz auswirken, vom Filterelement zuverlässig entfernt werden. Eben dies ist bei einer herkömmlichen, nicht eigenstabilen Polymermembran nicht ermöglicht.

Die US 5,228,987 A offenbart ein gattungsgemäßes Verfahren, bei dem die Filterelemente zunächst mit einem Lösungsmittel gereinigt und dann ein spezieller Filterhilfsstoff zum Bilden der Filterfläche anfiltriert wird. Anschließend wird die Suspension eingeleitet und mittels Querstromfiltration filtriert, wobei durch die Rührglieder ein Anlagern von Feststoffpartikeln an der Filterfläche verhindert wird.

Die WO 03/008067 A1 beschreibt ein Filtrationsverfahren, bei dem zunächst ein Filterhilfsmittel an einen Filter angeschwemmt wird und anschließend eine Suspension unter weiterer Zugabe von Filterhilfsmittel filtriert wird. Ein ähnliches Verfahren geht aus der DE 10 2007 038 828 A1 hervor.

Aus der US 6,332,977 B1 ist ein Druckfilter mit Filterelementen bekannt, bei welchem mittels eines Filterhilfsstoffs eine Filterfläche gebildet ist. Weiterhin ist eine Reinigungsvorrichtung beschrieben, mit welcher die Filterelemente mittels Dampf von dem Filterhilfsstoff gereinigt werden können.

Der Erfindung liegt die **Aufgabe** zugrunde, ein Verfahren zum Trennen einer Suspension mittels einer Querstromfiltration in ein Konzentrat und ein Filtrat anzugeben, welche es erlauben, dauerhaft einen wirtschaftlichen Durchsatz von Filtrat durch Filterelemente zu gewährleisten, wobei eine Kontamination des Filtrats mit Verunreinigungen aus der Suspension in hohem Maße vermieden wird.

Die Aufgabe wird nach der Erfindung durch ein Verfahren mit den Merkmalen des Anspruchs 1 gelöst. Vorteilhafte Ausführungsformen sind in den abhängigen Ansprüchen, der Beschreibung und den Figuren angegeben.

Bei dem erfindungsgemäßen Verfahren zum Trennen einer Suspension mittels einer Querstromfiltration in ein Konzentrat und ein Filtrat ist vorgesehen, dass als Trennelement zunächst ein Sieb verwendet wird, welches eine mittlere Porenweite aufweist, die größer als die mittlere Partikelgröße des Feststoffs in der Suspension ist, dass an dem Sieb gezielt eine permeable Soll-Partikelschicht anfiltriert wird, welche dann als eigentliches Trennmedium zum Abscheiden von Partikeln ausgebildet wird, dass die Soll-Partikelschicht zu bestimmten Reinigungszeitpunkten in einer Reinigungsphase von dem Sieb entfernt wird, dass anschließend die Soll-Partikelschicht durch Anfiltrieren von Partikeln während einer Aufbauphase wieder aufgebaut wird und das Filtrat während der Aufbauphase separat als Trüblauf über eine Trüblaufleitung abgeleitet wird.

Ein Grundgedanke der Erfindung besteht darin, zum Trennen einer Suspension in ein Konzentrat und ein Filtrat eine Filterelementanordnung in einer Querstromfiltrationsvorrichtung vorzusehen, dessen Durchtrittsöffnungen, insbesondere Poren, zwischen Suspensions- und Filtratraum zumindest im Mittel größer sind als die mittlere Partikelgröße, vorzugsweise größer sind als die größte Partikelgröße des suspendierten Feststoffs. Insbesondere durch vorteilhafte Kombination einer Drehzahl der Rührglieder und einer Filtrationsdruckdifferenz kann insbesondere die Ausbildung einer ersten sogenannten permeablen, also Filtrat-durchlässigen, Soll-Partikelschicht begünstigen, welche vorteilhaft an dem Filterelement anhaften und/oder zumindest teilweise in das Filterelement hineinragen kann und ausgebildet sein kann Partikel rückzuhalten, deren Partikelgröße kleiner als die mittlere Partikelgröße des Feststoffs in der Suspension ist. Dies kann sich insbesondere im Hinblick auf die abtragende Wirkung der Querströmung in einer Querstromfiltrationsvorrichtung vorteilhaft auswirken. Die Soll-Partikelschicht kann durch kurzfristige kuchenbildende Filtration gebildet werden, wobei die Soll-Partikelschicht als Filtrationsmedium zum Abscheiden von feinen Partikeln dienen kann. So kann ein weitgehend partikelfreies Filtrat erzeugt werden. Vorzugsweise kann durch Brückenbildung eine poröse Abdeckung der groben Siebporen erfolgen und so ein weiterer Durchtritt von Partikeln verhindert werden.

Ein weiterer Grundgedanke der Erfindung besteht darin, dass Filtrat, welches während einer Ausbildung der ersten Soll-Partikelschicht gebildet wird, getrennt vom übrigen Produktstrom (reines Filtrat) aus der Filtrationsvorrichtung abgeführt wird. Somit kann auch bei einem Durchtritt von Verunreinigungen durch das Filterelement beispielsweise während der Aufbauphase der Soll-Partikelschicht eine Kontamination des Produktstroms mit Feststoffpartikeln aus der Suspension verhindert werden. Sobald eine ausreichende Soll-Partikelschicht auf dem Filterelement ausgebildet ist, kann das nachfolgend gebildete, reine Filtrat dem übrigen Produktstrom zugeleitet werden. Die Soll-Partikelschicht kann demnach die Filterwirkung des Filterelements positiv beeinflussen und insbesondere ein Zurückhalten kleinster Partikel und Verunreinigungen begünstigen, welche einen geringeren mittleren Durchmesser aufweisen, als die mittlere Porengröße des Trennelements.

Erfindungsgemäß wird nach der Aufbauphase zum Aufbauen der Soll-Partikelschicht und vor der Reinigungsphase zum Entfernen der Soll-Partikelschicht das Filtrat während einer Nutzphase als ein Reinfiltrat über die Reinfiltratleitung abgeführt. Ein besonders reines Filtrat kann insbesondere nach der Ausbildung der Soll-Partikelschicht durch Differenzdruckfiltration an den Filterelementen gewonnen werden. Hierbei kann die ausgebildete Soll-Partikelschicht insbesondere als zusätzliche Feinfiltrationshilfe die Qualität, insbesondere die Partikelarmut des Filtrats begünstigen. Einem weiteren Anlagern von Feststoff auf dem Sieb kann insbesondere mittels der Rührglieder entgegengewirkt werden, welche eine abtragende Querströmung quer zur Filtrationsrichtung bewirken können.

Besonders zweckmäßig ist es nach einer Weiterbildung der Erfindung, dass der Suspension zumindest in der Aufbauphase der Soll-Partikelschicht ein Filterhilfsmittel zudosiert wird, welches in die Soll-Partikelschicht miteingelagert wird. Vorzugsweise wird die Soll-Partikelschicht vorwiegend, besonders bevorzugt fast ausschließlich aus Partikeln des Filterhilfsmittels gebildet. Hierfür kann in der Aufbauphase der Soll-Partikelschicht eine, vorzugsweise reine, Filterhilfsmittelsuspension verwendet werden. Filterhilfsmittel können insbesondere zur Differenzierung zwischen der Soll-Partikelschicht und dem nachträglich an das Filterelement angelagerten Filterkuchen beitragen. Dies kann insbesondere im Hinblick auf ein selektives Abtragen des Filterkuchens mittels einer Strömung quer zur Trennfläche während einer Filtrationsphase, also einer Reinfiltratphase vorteilhaft sein, wobei die Soll-Partikelschicht auf dem Sieb verbleibt. Beispielsweise kann als Filterhilfsmittel Kieselgur oder Kalziumsilikat, insbesondere definierter Partikelgröße, verwendet werden.

Für eine Reinigung des Siebs ist es nach einer vorteilhaften Weiterbildung der Erfindung vorgesehen, dass während der Reinigungsphase die Soll-Partikelschicht von dem Sieb mittels einer vorzugsweise pulsartigen Strömung von Filtrat in den Suspensionsraum entfernt wird. Die pulsartige Strömung kann mehrere Strömungspulse aufweisen. Hierzu kann eine Strömung von Filtrat aus dem Suspensionsraum in den Filtratraum zumindest zeitweise umgekehrt werden, wodurch in und/oder auf dem Sieb festsitzende Partikel des Feststoffanteils der Suspension in den Suspensionsraum zurückgespült werden können. So können während der Reinigungsphase bedarfsgerecht die Soll-Partikelschicht und möglicherweise an dem Sieb angelagerter Partikel von dem Sieb entfernt werden, wobei eine verbesserte Filtratgängigkeit des Siebs gegenüber einem Zeitpunkt vor der Reinigungsphase erreicht werden kann. Zumindest während der pulsartigen Strömung von Filtrat in den Suspensionsraum kann der Differenzdruck an dem Sieb zwischen dem Suspensionsraum und dem Filtratraum gegenüber der Nutzphase umgekehrt gerichtet sein.

Besonders zweckmäßig ist es nach einer Weiterbildung der Erfindung, dass zumindest die während der Reinigungsphase entfernte Soll-Partikelschicht mittels des zumindest einen Rührglieds resuspendiert wird. Dies kann insbesondere einem Blockieren oder Zusetzen des Suspensionslaufwegs durch die Filtrationseinrichtung durch Feststoff vorbeugen. Hierbei kann eine Filterkuchenschicht, welche während der Reinigungsphase mit der Soll-Partikelschicht von dem Sieb abgelöst wurde, ebenfalls resuspendiert werden. Der so in dem Suspensionsraum zumindest kurzfristig erhöhte Flüssigkeitsanteil kann hierbei so eingestellt werden, dass eine ausreichende Befeuchtung des abgelösten Feststoffs von dem Sieb und folglich eine bedarfsgerechte Resuspendierung des Feststoffs erfolgen kann.

Für eine besonders hohe Reinheit des Filtrats ist es nach einer Weiterbildung der Erfindung bevorzugt, dass eine Erkennungseinrichtung zumindest während der Aufbauphase eine Partikelbeladung des Filtrats erfasst und mit einer Steuerungseinrichtung in Verbindung steht, wobei die Steuerungseinrichtung eine Ventilanordnung steuert, welche das Filtrat in Abhängigkeit von der erfassten Partikelbeladung der Trüblaufleitung oder der Reinfiltratleitung zuführt. Während der Aufbauphase der Soll-Partikelschicht können feine Partikel, welche einen geringeren Durchmesser als die Porenweite des Siebs aufweisen, durch das Sieb aus dem Suspensionsraum in den Filtratraum hindurchtreten. Sobald die Soll-Partikelschicht auf dem Sieb ausgebildet ist, können auch Partikel in dem Suspensionsraum zurückgehalten werden, die einen geringeren Durchmesser als die Porenweite des Siebes aufweisen. Die Soll-Partikelschicht kann hierbei insbesondere als Feinpartikelrückhalthilfe vorgesehen sein, welche es erlaubt, ein Filtrat besonderer Reinheit zu erhalten.

Die Reinheit des gewonnenen Filtrats kann weiter gesteigert werden, indem Filtrat zumindest während der Aufbauphase der Soll-Partikelschicht auf eine Partikelbeladung hin überprüft wird und gegebenenfalls, sollte das Filtrat eine unzureichende Reinheit aufweisen, über eine Trüblaufleitung separat von dem übrigen Filtrat aus dem Filtratraum abgeleitet wird. Die Erkennungseinrichtung kann hier beispielsweise als Sensor ausgebildet sein, welcher die Opazität, den Brechungsindex oder Transmissionseigenschaften des Filtrats erfasst. Ebenfalls ist es denkbar, einen Sensor vorzusehen, der eine Leitfähigkeit oder eine sonstige physikalische oder chemische Messung/Bestimmung der Reinheit des Filtrats durchführt. Auch eine optische Beurteilung durch den Anlagenbetreiber über ein, vorzugsweise filtratseitiges Schauglas oder eine zeitgesteuerte Dauer der Aufbauphase sind zur Prozesssteuerung möglich. Wird eine unzureichende Reinheit des Filtrats festgestellt, kann ein entsprechendes Volumen an Filtrat separat über die Trüblaufleitung abgeleitet werden, wobei das Volumen zumindest dem Volumen an verunreinigtem Filtrat entspricht, vorzugsweise jedoch zusätzlich ein definiertes Volumen an reinem Filtrat umfasst, wodurch beispielsweise eine reinigende Spülung der Leitungen bereitgestellt werden kann. Sobald die Erkennungseinrichtung, insbesondere während oder nach dem Aufbau der Soll-Partikelschicht, eine gewünschte Reinheit des Filtrats erkennt, kann das reine Filtrat über die Reinfiltratleitung dem reinen Filtratprodukt zugeführt werden. Hierzu kann mittels der Ventilanordnung der Zugang zur Trüblaufleitung wieder geschlossen und der Zugang zur Reinfiltratleitung wieder geöffnet werden.

Besonders bevorzugt ist es nach einer Weiterbildung des erfindungsgemäßen Verfahrens, dass während der Reinigungsphase in zumindest einem kammerartigen Modul der Differenzdruck zwischen dem Suspensionsraum und dem Filtratraum aufrecht erhalten und Filtrat gewonnen wird. Hierbei ist der Druck im Suspensionsraum höher als der Druck im Filtratraum des Moduls. Es kann also ein kontinuierlicher Betrieb einer Vorrichtung zum Trennen einer Suspension mittels einer Querstromfiltration in ein Konzentrat und ein Filtrat ermöglicht sein, wobei zumindest eines der kammerartigen Module eine Reinigungsphase des Siebes durchläuft, während zumindest in einem weiteren kammerartigen Modul eine Nutzphase zum Gewinnen von Reinfiltrat ermöglicht wird. Es kann also segmentweise zeitgleich oder zeitlich versetzt zueinander sowohl eine Reinigungsphase als auch eine Nutzphase durchgeführt werden. Dies kann einer Überhöhung der Feststoffkonzentration in der Filtrationsvorrichtung vorbeugen und somit einer Verstopfungsgefahr des Konzentratauslasses vorbeugen.

Bedarfsgerecht kann eine Erkennungseinrichtung so angeordnet werden, dass sie die Reinheit von zumindest zwei Siebfiltraten, also zweier Module, bevorzugt aller Siebfiltrate der Filtrationsvorrichtung, also aller vorgesehenen Module, der Filtrationsvorrichtung erfasst. Sollte es vorgesehen sein, dass Siebe einzelner Module der Filtrationseinrichtung zueinander zeitlich versetzt Reinigungsphasen durchlaufen, kann es vorteilhaft sein, in jedem der kammerartigen Module eine Erkennungseinrichtung vorzusehen, welche die Reinheit des Filtrats der einzelnen kammerartigen Module individuell erfasst, wobei eine Ventilanordnung zum Zuführen des Filtrats aus den jeweiligen Modulen zu einer Reinfiltratleitung oder einer Trüblaufleitung entsprechend angesteuert wird.

Ebenso kann eine separate Erfassung beziehungsweise Ermittlung der Reinheit von Filtrat aus einzelnen Modulen durch eine gemeinsame Erkennungseinrichtung über eine entsprechende Ventil- und Leitungsanordnung ermöglicht sein, welche ausgebildet ist Filtrat einzeln aus den Modulen der Filtrationsvorrichtung der gemeinsamen Erkennungseinrichtung und anschließend bedarfsgerecht der Reinfiltratleitung oder der Trüblaufleitung zuzuführen. Die Module können zu Gruppen von mindestens zwei, vorzugsweise zu der Hälfte der vorgesehenen Module zusammengefasst sein, welche gemeinsam gereinigt werden können und anschließend gemeinsam die Aufbauphase der Soll-Partikelschicht durchlaufen. Dabei kann eine Reinheit des Filtrats für eine Gruppe von Modulen einheitlich mittels der Erkennungseinrichtung bestimmt werden. Filtrat beispielsweise einer zweiten Gruppe von Modulen kann, zumindest während eines Teils der Aufbauphase der Soll-Partikelschicht an den Sieben einer ersten Gruppe von Modulen, zurück gehalten werden, wodurch lediglich die Reinheit des Filtrats von der ersten Gruppe von Modulen bestimmt werden kann. Hierzu können entsprechende Ventile, beispielsweise an den Modulen oder an Zulaufleitungen, vorgesehen sein, welche eine Zuleitung von Filtrat zu der Erkennungseinrichtung unterbinden können. Die voranstehend beschriebenen Anordnungen von filtratraumseitigen Ventilen und Leitungen kann ebenfalls dazu ausgebildet sein eine Reinigungsphase einzelner Module oder einer definierten Gruppe von Modulen zu ermöglichen, wobei gleichzeitig oder zeitlich versetzt hierzu eine Nutzphase in weiteren Modulen oder Modulgruppen ermöglicht werden kann.

Vorliegend kann eine Ventilanordnung jedes beliebige Bauteil darstellen, welches es ermöglicht, einen Volumenstrom in einer Fluidleitung an oder hinter einer Leitungsgabelung dem einen Leitungsgabelsegment oder dem anderen Leitungsgabelsegment vorzugsweise selektiv zuzuführen. Ein solches Bauteil oder eine solche Bauteilgruppe ermöglicht es also, ein Fluid in einer Rohrleitung in Abhängigkeit von einem Steuerungssignal, welches die Ventilanordnung von der Steuerungseinrichtung erhält, unterschiedlichen Weiterleitungen (zum Beispiel einer Trüblaufleitung oder einer Reinfiltratleitung) zuzuführen. So kann in einfacher Weise eine Trennung von reinem Filtrat und verunreinigtem Filtrat nach der Filtration ermöglicht werden. Vorzugsweise können Ventile auch hinter Leitungsteilungen (Gabelungen) angeordnet sein, wobei je ein Ventil vorgesehen werden kann, welches ein Leitungssegment öffnet oder verschließt.

Vorteilhafterweise kann die Erkennungseinrichtung ausgebildet sein, einen Filtratvolumenstrom in den einzelnen Modulen der Filtrationsvorrichtung zu bestimmen. Dies kann insbesondere im Hinblick auf die Bestimmung eines wirtschaftlichen Zeitpunkts für eine Reinigungsphase der Siebe in den einzelnen kammerartigen Modulen vorteilhaft sein. Die Einrichtung zur Bestimmung des Volumenstroms der einzelnen kammerartigen Module kann ebenfalls als diskrete Einrichtung unabhängig von einer Einrichtung zur Bestimmung der Reinheit des Filtrats, ausgebildet sein.

Insbesondere zum Steigern der Ausbeute an reinem Filtrat kann es vorteilhaft sein, dass zumindest ein Teil des abgeleiteten Trüblaufs aufkonzentriert und/oder der Querstromfiltration suspensionsseitig zugeführt wird. Hierbei kann beispielsweise eine weitere Filtration oder beispielsweise Destillation des Trüblaufs, mittels einer entsprechenden Einrichtung zum Aufkonzentrieren des Trüblaufs, durchgeführt werden. Hierbei kann abgetrenntes Filtrat reinem Filtrat zugeführt werden und zumindest teilweise aufkonzentrierter Trüblauf der zu trennenden Suspension zugeführt werden.

Mit der Einrichtung zum Aufkonzentrieren des Trüblaufs kann eine weitere Erkennungseinrichtung verbunden sein, welche die Reinheit, insbesondere die Partikelbeladung, des abgetrennten Filtrats des aufkonzentrierten Trüblaufs erfasst. Die weitere Erkennungseinrichtung kann mit der Steuerungseinrichtung in Verbindung stehen, wobei die Steuerungseinrichtung eine weitere Ventilanordnung steuert, welche angeordnet ist, das Filtrat des aufkonzentrierten Trüblaufs über eine Leitungsanordnung in Abhängigkeit von einer erfassten Partikelbeladung beispielsweise zu verwerfen, erneut für eine weitere Reinigung dem Trüblauf zuzuführen oder über die Reinfiltratleitung, etwa als Produkt, abzuführen.

Bei einer Vorrichtung zum Trennen einer Suspension mittels einer Querstromfiltration in ein Konzentrat und ein Filtrat ist vorgesehen, dass als Trennelement ein Sieb vorgesehen ist, welches eine mittlere Porenweite aufweist, die größer ist als die mittlere Partikelgröße des Feststoffs in der Suspension, dass an dem Sieb gezielt eine permeable Soll-Partikelschicht anfiltriert ist, welche dann als eigentliches Trennmedium zum Abscheiden von Partikeln ausgebildet ist, Partikel zurückzuhalten, deren Partikelgröße kleiner als die mittlere Partikelgröße des Feststoffs in der Suspension ist, und dass eine Trüblaufleitung vorgesehen ist, über welche verunreinigtes Filtrat gesondert ableitbar ist.

Ein Grundgedanke ist es, eine Vorrichtung zum Trennen einer Suspension mittels einer Querstromfiltration in ein Konzentrat und ein Filtrat vorzusehen, welches segmentartig aufgebaut ist, wobei die Segmente jeweils mit mindestens einem Trennmittel ausgebildet und miteinander zum Bilden eines durchgängigen Strömungswegs für Suspension durch die Vorrichtung verbindbar sind. Dabei ist es vorgesehen, dass zumindest auf einem der Trennmittel eine Soll-Partikelschicht angeordnet ist, welche ausgebildet ist, Partikel zurückzuhalten, die ohne Soll-Partikelschicht durch das Trennmittel hindurch treten könnten. Zum getrennten Abführen von verunreinigtem Filtrat, etwa Trüblauf, ist eine Rücklaufleitung vorgesehen, mittels welcher einer Verunreinigung von reinem Filtrat durch Trüblauf vorgebeugt werden kann.

Nach einer besonders bevorzugten Ausführungsform derVorrichtung ist es vorgesehen, dass das Sieb aus einem metallischen Gewebe gebildet ist. Das metallische Gewebe kann insbesondere ein- oder mehrschichtig gebildet sein, welche vorzugsweise versintert sind. Das Reinigen des Siebs während der Reinigungsphase kann insbesondere durch ein Anlegen eines Differenzdrucks zwischen dem Suspensionsraum und im Filtratraum ermöglicht sein. Hierbei ist es besonders zweckmäßig, dass der Druck in dem Filtratraum höher ist als der Druck in dem Suspensionsraum, wodurch ein Anteil an Filtrat durch das Sieb aus dem Filtratraum zurück in den Suspensionsraum insbesondere pulsartig spülbar ist. Während einer Nutzphase kann ebenfalls eine Druckdifferenz zwischen Suspensionsraum und Filtratraum vorgesehen sein, wobei jedoch der Druck im Suspensionsraum bevorzugt höher ist als der Druck im Filtratraum. Demnach kann bei einem Wechsel zwischen Nutzphase und Reinigungsphase eine Druckveränderung auf ein Trennelement, welches bevorzugt als Sieb ausgebildet ist, wirken. Diese Druckveränderung kann insbesondere zu einer Materialbelastung des Siebes beitragen, wobei alternierend eine Last, insbesondere ein Flüssigkeitsdruck, auf den Seiten eines Siebes anliegt. Das Sieb kann insbesondere aus einem Material gebildet sein, welches dazu ausgebildet ist, Druckbelastungen der voranstehend beschriebenen Art Stand zu halten.

Insbesondere für einen besonders wartungsarmen Betrieb der Vorrichtung kann es vorteilhaft sein, dass das Sieb mindestens zwei poröse Schichten aufweist, wobei die Porenweite der einzelnen Schichten mit zunehmendem Abstand der jeweiligen Schicht vom Suspensionsraum zunimmt. Insbesondere während der Aufbauphase der Soll-Partikelschicht können kleinste Partikel zumindest durch die erste Schicht, welche dem Suspensionsraum am nächsten ist, hindurch treten. Zum Schutz der filtrationswirksamen Eigenschaften des Siebs, kann es jedoch vorteilhaft sein, Bereiche im Inneren des Filtermaterials partikelarm, bevorzugt partikelfrei vorzusehen, was insbesondere für die Aufrechterhaltung eines wirtschaftlichen Durchsatzes an Reinfiltrat durch das Sieb vorteilhaft sein kann. Eine Anordnung von Siebschichten, welche mit abnehmender Distanz zum Filtratraum eine zunehmende Porengröße aufweist, kann dazu beitragen, Partikel, welche zumindest während der Aufbau Phase der Soll-Partikelschicht in das Sieb eindringen können, zuverlässig aus dem Sieb abzuführen und dem Filtratraum zuzuführen. Ein solches Sieb kann insbesondere dazu ausgebildet sein, eine besonders geringe, innenliegende Partikelbeladung in den Siebschichten auszubilden. Die Poren der mindestens zwei porösen Schichten können dem Grunde nach kegelförmig ausgebildete Durchgänge durch das Sieb bilden, deren schmalere Kegeleröffnungen dem Suspensionsraum zugewandt sind und deren weiter Kegelöffnungen dem Filtratraum zugewandt sind. Die Poren der einzelnen Schichten können auch versetzt zueinander ausgebildet sei. Das Sieb kann bevorzugt auf einem Lochblech vorgesehen sein, welches insbesondere eine mechanische Unterstützung des Siebs bilden kann. Dies kann insbesondere hinsichtlich einer strukturellen Integrität des Siebs beim Anlegen hoher Prozessdrücke während der Nutzphase und/oder der Reinigungsphase vorteilhaft sein.

Besonders zweckmäßig ist es nach einer Weiterbildung der Vorrichtung, dass zumindest eine erste Schicht des Siebs mit einer Schichtdicke von 10 µm bis 200 µm gebildet ist und die einzelnen Schichten fest miteinander verbunden sind. Diese besonders feine bzw. dünne erste Schicht des Siebs, welche die filtrationswirksame Schicht bilden kann, kann insbesondere laminar auf einer zweiten Schicht des Siebs angeordnet sein. Dies kann einer Taschenbildung zwischen den Schichten vorbeugen. Eine Taschenbildung kann insbesondere dann vorliegen, wenn zwischen Schichten eines Sieb oder Filterelements Bereiche vorliegen, in welche Partikel bevorzugt auf dem Weg durch das Sieb, vom Suspensionsraum in dem Filtratraum, eingelagert werden. Die so eingelagerten Partikel können die Menge an durch das Sieb durchtretendem Filtrat nachhaltig beeinträchtigen.

Für eine besonders wirtschaftliche Gewinnung von reinem Filtrat kann es vorteilhaft sein, dass in Strömungsrichtung des Filtrats nach dem Sieb eine Erkennungseinrichtung angeordnet ist, welche ausgebildet ist, eine Partikelbeladung des Filtrats zu erfassen und mit einer Steuerungseinrichtung in Verbindung steht, wobei die Steuerungseinrichtung ausgebildet ist, eine Ventilanordnung zu steuern, mittels welcher das Filtrat in Abhängigkeit von der erfassten Partikelbeladung der Trüblaufleitung oder der Reinfiltratleitung zuführbar ist. Die Erkennungseinrichtung kann insbesondere an einem Leitungsabschnitt angeordnet sein, über welchen Filtrat aus der Vorrichtung ableitbar ist. Nach dem Leitungsabschnitt kann insbesondere die Ventilanordnung vorgesehen sein, wie sie bereits voranstehend beschrieben wurde. Die Erkennungseinrichtung kann demnach insbesondere in Flussrichtung des Filtrats vor der Ventilanordnung angeordnet sein. In Abhängigkeit von der erkannten Reinheit des Filtrats, ist das Filtrat dem Trüblauf oder der Leitung für reines Filtrat zuführbar. Die Erkennungseinrichtung kann auch ausgebildet sein einen Druck in der Filtratleitung zu bestimmen.

Nach einer Variante der Vorrichtung kann in oder nach jedem der vorgesehenen kammerartigen Module filtratraumseitig eine Erkennungseinrichtung angeordnet sein. Somit kann eine Reinheit des Filtrats bereits unmittelbar nach der Filtration individuell in den einzelnen Modulen der erfindungsgemäßen Filtrationsvorrichtung bestimmbar sein. Dies kann insbesondere bei zeitlich zueinander versetzter Reinigung der Module der Filtrationsvorrichtung zweckdienlich sein. Während der Reinigung der Siebe einzelner Module kann reines Filtrat von weiteren vorgesehenen Modulen abgeleitet werden. Bedarfsgerecht kann bei einer Erkennung von Trüblauf eine Ableitung des verunreinigten Filtrats über die Trüblaufleitung ermöglicht sein. Zum Spülen der Vorrichtung, insbesondere des Trüblauf erzeugenden Moduls und/oder eines zugehörigen Leitungssegments, kann die Steuerungseinrichtung ausgebildet sein, die Ventilanordnung erst anzusteuern die Trüblaufleitung zu verschließen und die Leitung für reines Filtrat gleichermaßen zu öffnen, wenn die Erkennungseinrichtung für eine definierte Zeitspanne keine Verunreinigung des Filtrats erkennt.

An der Zeichnung wird nachfolgend die Erfindung weiter erläutert.

In den Figuren zeigen:
- Fig. 1: eine bevorzugte Ausführungsform der Vorrichtung zum Trennen einer Suspension mittels einer Querstromfiltration in ein Konzentrat und ein Filtrat,
- Fig. 2: einen schematischen Ablauf der Betriebssequenzen mit Reinigungsphase und Nutzphase der erfindungsgemäßen Filtration.

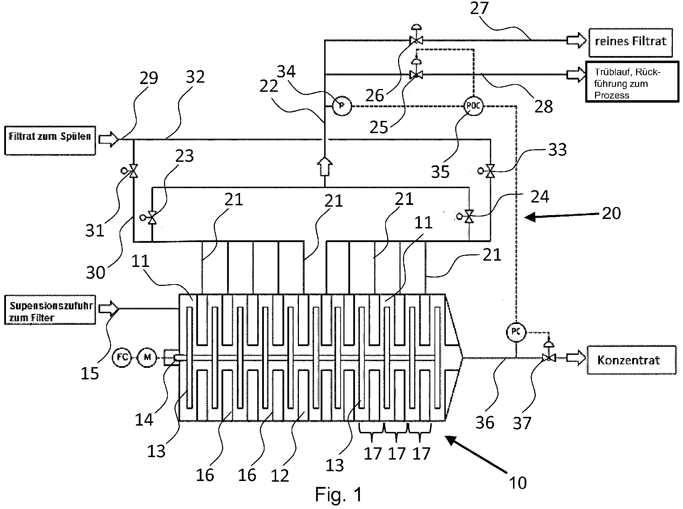

In Figur 1 ist eine Filtrationsvorrichtung 10 mit einem entsprechenden Leitungssystem 20 zum Ableiten von Filtrat dargestellt. Die Filtrationsvorrichtung 10 kann modulartig aufgebaut sein, wobei jedes der linear hintereinander angeordneten Module 17 zumindest einen Suspensionsraum 11 und einen Filtratraum 12 aufweisen kann. Suspensionsraum 11 und Filtratraum 12 können insbesondere durch mindestens ein Filterelement 16, beispielsweise ein Sieb, räumlich voneinander getrennt sein. Entlang einer gemeinsamen Welle 14 kann in jedem der Module zumindest ein Rührglied 13 vorgesehen sein. Die Filtrationsvorrichtung 10 kann mit einer beliebigen Anzahl von Modulen 17 vorgesehen werden. Die Module 17 können hierbei mit Teilwellen gebildet sein, welche zu der Welle 14 der Filtrationsvorrichtung 10 kombinierbar sein können.

Über eine Zulaufleitung 15 kann Suspension dem Suspensionsraum der Filtrationsvorrichtung 10 zugeführt werden, welcher aus den Suspensionsräumen 11 der einzelnen Module 17 zusammengesetzt ist. Die Zulaufleitung 15 kann insbesondere in einem radial von der Welle 14 beabstandeten Zulaufpunkt mit der Vorrichtung 10 fluidisch verbunden sein. Mittels einer relativen Druckerhöhung im Suspensionsraum 11 gegenüber dem Filtratraum 12 kann in der Filtrationsvorrichtung 10 ein Filtrat gewonnen werden. Das Filtrat kann filtratraumseitig über die Filtratanschlüsse 21 der gemeinsamen Filtratleitung 22 zugeführt werden. Über die Konzentratablaufleitung 36 kann die aufkonzentrierte Suspension aus der Filtrationsvorrichtung 10 abgeführt werden, welche an einem der Zulaufleitung 15 gegenüberliegenden Ende der Vorrichtung 10 vorgesehen sein kann.

An der Filtratleitung 22 kann eine Erkennungseinrichtung 34 angeordnet sein, welche ausgebildet ist, eine Partikelbeladung des Filtrats zu erfassen und mit einer Steuerungseinrichtung 35 in Verbindung steht, wobei die Steuerungseinrichtung 35 ausgebildet ist, eine Ventilanordnung zu steuern, mittels welcher das Filtrat in Abhängigkeit von der erfassten Partikelbeladung einer Trüblaufleitung 28 oder einer Reinfiltratleitung 27 zuleitbar ist.

Die Ventilanordnung kann insbesondere ein Trüblaufleitungsventil 25 und ein Reinfiltratleitungsventil 26 aufweisen. Erkennt die Erkennungseinrichtung 34 eine Partikelbeladung und/oder den Druck des Filtrats kann die Steuerungseinrichtung 35 das Trüblaufleitungsventil 25 öffnen und das Reinfiltratleitungsventil 26 verschließen, wodurch eine separate Ableitung von verunreinigtem Filtrat ermöglicht ist. Sobald die Erkennungseinrichtung 34 eine Mindestreinheit des Filtrats erkennt, wobei das Filtrat bevorzugt frei von Partikel ist, öffnet die Steuerungseinrichtung 35 das Reinfiltratleitungsventil 26 und verschließt das Trüblaufleitungsventil 25. Somit kann anstelle eines Ablaufs an Filtrat über die Trüblaufleitung 28 nunmehr das Filtrat über die Reinfiltratleitung 27 einer Reinfiltratsammelstelle zugeführt werden. Bevorzugt kann das Leitungssystem mit reinem Filtrat nachgespült werden bevor die Trüblaufleitung 28 geschlossen und die Reinfiltratleitung 27 geöffnet wird.

Zur Unterstützung der Reinigung der einzelnen Siebe in den Modulen der Filtrationsvorrichtung 10 kann Filtrat aus dem Filtratraum 12 in den Suspensionsraum 11 rückgespült werden. Hierzu kann insbesondere die Rückspülfluidleitung 29 vorgesehen werden, welche nach Figur 1 eine erste Rückspülfluid-Zulaufleitung 30 und eine zweite Rückspülfluid-Zulaufleitung 32 aufweist. Diese sind mit den einzelnen Filtraträumen 12 der Filtrationsvorrichtung 10 fluidisch verbunden. Vorliegend sind die Module 17 der Filtrationsvorrichtung 10 zu Gruppen von jeweils fünf Modulen 17 zusammengefasst, wobei Filtrat aus den Filtraträumen 12 der Gruppe von Modulen 17 kombiniert wird, bevor das Filtrat der Filtratleitung 22 zugeführt wird. Nach Figur 1 ist eine erste Gruppe von fünf Modulen über das erste Filtratleitungsventil 23 mit der Filtratleitung 22 sowie über das Rückspülfluid-Zulaufleitungsventil 31 mit der ersten Rückspülfluid-Zulaufleitung 30 der Rückspülfluidleitung 29 verbunden. Die zweite Gruppe von fünf Modulen 17 der Filtrationsvorrichtung 10 ist über das zweite Filtratleitungsventil 24 mit der Filtratleitung 22 und über das Rückspülfluid-Zulaufleitung Ventil 33 mit der zweiten Rückspülfluid-Zulaufleitung 32 der Rückspülfluidleitung 29 verbunden. Vorzugsweise können die Module 17 der Filtrationsvorrichtung 10 auch zu kleineren Gruppen zusammengefasst werden. Besonders bevorzugte weist jedes Modul 17 ein Reinfiltratleitungsventil, ein Rückspülfluid-Zulaufleitungsventil sowie eine Rückspülfluid-Zulaufleitung auf, was einen individuellen Betrieb sowie eine individuell einstellbare Reinigungsphase der einzelnen Module 17, insbesondere ihrer Filterelemente 16 ermöglicht.

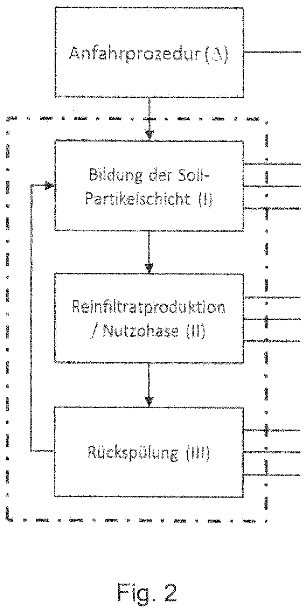

Figur 2 zeigt ein Übersichtsschema, welches die einzelnen Teilschritte eines erfindungsgemäßen Verfahrenszyklus (Schritt I bis IIII) beschreibt.

Bevor der erste Schritt des Ablaufs erfolgen kann, muss die Filtrationsvorrichtung 10 in Betrieb genommen werden (Schritt Δ). Die Inbetriebnahme kann insbesondere dann vollzogen sein, wenn die Filtrationsvorrichtung 10 ausreichend und kontinuierlich mit Suspension beschickt wird und die Rührglieder 13 an der Welle 14 die notwendige Rührleistung, beispielsweise in Form einer Mindestdrehzahl, erreicht haben.

Sobald ausreichend Suspension in dem Suspensionsraum 11 der Filtrationsvorrichtung 10 vorliegt, kann in einem ersten Schritt die Soll-Partikelschicht, welche auch als Grundschicht bezeichnet werden kann, ausgebildet werden (Schritt I). Vorzugsweise sind die Ventile der erfindungsgemäßen Vorrichtung zumindest zu Beginn der Ausbildung der Soll-Partikelschicht geschlossen, wobei die Rührglieder 13 vorzugsweise in einem unteren Drehzahlbereich drehen und die Vorrichtung 10 von Suspension durchströmt wird. Anschließend können das erste Filtratleitungsventil 23 und/oder das zweite Filtratleitungsventil 24 sowie das Trüblaufleitungsventil 25 geöffnet werden, wobei über den Grad der Öffnung des Trüblaufleitungsventils 25 eine gewünschte Druckdifferenz, vorzugsweise eine geringe Druckdifferenz, zwischen dem Filtratraum 12 und dem Suspensionsraum 11 einstellbar ist. In Abhängigkeit von dem Fortschritt der so durchgeführten Ausbildung der Soll-Partikelschicht, kann eine sukzessiv abnehmende Menge an Partikeln, welche einen kleineren Durchmesser als die durchschnittliche Porengröße einer oberen Filterschicht aufweisen, das Filtersieb passieren. So kann der zu Beginn der Filtration entstehende Trüblauf nachlassen, also die Partikelbeladung des Filtrats abnehmen. Insbesondere kann mittels des Trüblaufleitungsventils 25 eine Druckdifferenz zwischen dem Filtratraum 12 und dem Suspensionsraum 11 so eingestellt werden, dass eine nachteilige Verdichtung der Soll-Partikelschicht aufgrund einer zu hohen Druckdifferenz vermieden werden kann. Eine nachteilig verdichtete Soll-Partikelschicht kann insbesondere durch eine schlechte Durchströmbarkeit von Filtrat ausgezeichnet sein. Sobald die Ausbildung der Soll-Partikelschicht beendet ist, also die Erkennungseinrichtung 34 ein reines Filtrat, insbesondere ein Filtrat ohne nennenswerte Partikelbeladung bzw. ein Filtrat, dessen Partikelbeladung unterhalb eines Beladungsgrenzwerts liegt, erkennt, kann das Reinfiltratleitungsventil 26 für eine Nutzphase (Schritt II) geöffnet werden und das Trüblaufleitungsventil 25 zumindest teilweise geschlossen werden. In einer Nutzphase kann reines Filtrat gewonnen und über die Reinfiltratleitung 27 abgeleitet werden. Der Grad der Öffnung des Reinfiltratleitungsventils 26 kann einen gewünschten Filtratfluss oder eine gewünschten Filtrationsdruckdifferenz zwischen Suspensionsraum 11 und dem Filtratraum 12 beeinflussen. Sobald ein gewünschter Filtratdurchsatz nicht mehr aufrechterhalten werden kann, kann die Soll-Partikelschicht und ein möglicher Filterkuchen durch eine Rückspülung von Filtrat während einer Reinigungsphase von zumindest einem der Siebe 16 der Filtrationsvorrichtung 10 in den Suspensionsraum 11 abgelöst werden (Schritt III), wobei die Rührglieder 13 zur Resuspendierung der abgelösten Feststoffs beitragen können.

Während der Reinigungsphase können zumindest das erste Filtratleitungsventil 23 und das zweite Filtratleitungsventil 24 geschlossen werden. Durch Aufheben der Druckdifferenz über der Soll-Partikelschicht, insbesondere zwischen Suspensionsraum 11 und Filtratraum 12, kann die Soll-Partikelschicht aufgrund der Rührwirkung der Rührglieder 13 von dem druckdifferenzfreien Sieb abgelöst werden. Unterstützend können das Rückspülfluid-Zulaufleitungsventil 31der ersten Rückspülfluid-Zulaufleitung und die Rückspülfluid-Zulaufleitungsventil 33 der zweiten Rückspülfluid-Zulaufleitung vorzugsweise kurz geöffnet werden. Der pulsartige Druck des Rückspülfiltrats ist vorzugsweise höher als der suspensionsraumseitig an dem jeweiligen Sieb 16 anliegende Druck, wodurch Filtrat pulsartig durch das Sieb aus dem Filtratraum 12 in den Suspensionsraum 11 strömen kann. Das Ablösen der Soll-Partikelschicht vom Siebmedium kann hierdurch verbessert werden. Vorzugsweise können mehrere pulsartige Ströme von Filtrat nacheinander durch das Sieb erfolgen. Für einen besonders zuverlässigen Austrag von resuspendiertem Feststoff aus der Filtrationsvorrichtung 10 kann während der Reinigungsphase die Zufuhr von Suspension zu und der Austrag an Konzentrat aus der Filtrationsvorrichtung 10 aufrecht gehalten werden.

Bevorzugt kann das Rückspülfluid-Zulaufleitungsventil 31 der ersten Rückspülfluid-Zulaufleitung und das Rückspülfluid-Zulaufleitungsventil 33 der zweiten Rückspülfluid-Zulaufleitung und/oder weitere vorsehbare Rückspülfluid-Zulaufleitungsventile zeitversetzt zueinander geöffnet werden. Somit kann die Soll-Partikelschicht von Sieben 16 unterschiedlicher Module 17 nach einander oder zeitlich überlappend abgelöst werden. Somit kann beispielsweise einer Konzentrationsüberhöhung im Suspensionsraum 11 aufgrund der Respuspendierung einer zu großen Mengen an Feststoff vermieden werden. Durch die zeitlich versetzte Reinigung der Siebe 16 der einzelnen Module 17 kann insgesamt der Betrieb der Filtrationsvorrichtung 10 zumindest für einen Teil der vorgesehenen Module 17 aufrecht gehalten werden, also ein kontinuierlicher Betrieb der Filtrationsvorrichtung bereitgestellt werden. Sobald die Reinigungsphase an dem Sieb 16 des jeweiligen Moduls 17 der Filtrationsvorrichtung 10 abgeschlossen ist kann von neuem mit der Ausbildung einer Soll-Partikelschicht an dem Sieb begonnen werden (Schritt I).

## Patentansprüche

1. Verfahren zum Trennen einer Suspension mittels einer Querstromfiltration in ein Konzentrat und ein Filtrat, bei dem:
- die Suspension in einen Suspensionsraum (11) mit mehreren, in Serie angeordneten kammerartigen Modulen (17) eingeleitet wird, in welchen jeweils mindestens ein ringförmiges Trennelement mit einer Trennfläche vorgesehen ist,
- zum Filtrieren ein Differenzdruck zwischen dem Suspensionsraum (11) und einem Filtratraum (12) eingestellt wird, der sich an einer vom Suspensionsraum (11) abgewandten Seite des Trennelements befindet,
- Filtrat, welches aufgrund des anliegenden Differenzdrucks das Trennelement durchdringt, über eine Filtratleitung (22) abgeleitet wird,
- während die im Suspensionsraum (11) verbliebene Suspension zu einem Konzentrat eingedickt wird, welche aus dem Suspensionsraum (11) über einen Ablauf (36) abgeleitet wird, und
- in jedem Modul (17) zumindest ein Rührglied (13) mit radial angeordneten Rührelementen in dem Suspensionsraum (11) in einem geringen Abstand über die Trennfläche relativ zu dieser bewegt wird, so dass zum Durchführen einer Querstromfiltration in einem Spalt zwischen dem Rührglied (13) und der Trennfläche eine gerichtete Strömung quer zur Trennfläche erzeugt wird,
**dadurch gekennzeichnet,**
- **dass** als Trennelement zunächst ein Sieb (16) verwendet wird, welches eine mittlere Porenweite aufweist, die größer als die mittlere Partikelgröße des Feststoffs in der zu filtrierenden Suspension ist,
- **dass** in einer Aufbauphase eine kuchenbildende Filtration durchgeführt wird, wobei an dem Sieb (16) gezielt aus der Suspension eine permeable Soll-Partikelschicht anfiltriert und aufgebaut wird, welche dann als eigentliches Trennmedium zum Abscheiden von Partikeln ausgebildet wird,
- **dass** nachfolgend in einer Nutzphase die Querstromfiltration durchgeführt wird, wobei Filtrat die am Sieb (16) aufgebaute Soll-Partikelschicht durchdringt und als ein Reinfiltrat über eine Reinfiltratleitung (27) abgeleitet wird, wobei mittels der Rührglieder (13) eine abtragende Querströmung quer zur Filtrationsrichtung bewirkt und einem weiteren Anlagern von Feststoff an dem Sieb (16) entgegengewirkt wird,
- **dass** die Soll-Partikelschicht zu bestimmten Reinigungszeitpunkten in einer Reinigungsphase von dem Sieb (16) entfernt wird, in dem Filtrat aus dem Filtratraum (12) durch das Sieb (16) zurück in den Suspensionsraum (11) geströmt wird,
- **dass** anschließend die Soll-Partikelschicht durch Anfiltrieren von Partikeln aus der Suspension während einer weiteren Aufbauphase wieder aufgebaut wird und
- **dass** das Filtrat während der Aufbauphase separat als Trüblauf über eine zusätzliche Trüblaufleitung (28) abgeleitet wird.

2. Verfahren nach Anspruch 1,
**dadurch gekennzeichnet,**
**dass** der Suspension zumindest in der Aufbauphase der Soll-Partikelschicht ein Filterhilfsmittel zudosiert wird, welches in die Soll-Partikelschicht miteingelagert wird.

3. Verfahren nach einem der Ansprüche 1 oder 2,
**dadurch gekennzeichnet,**
**dass** die Soll-Partikelschicht weitgehend aus Partikeln des Filterhilfsmittels aufgebaut wird, wobei in der Aufbauphase eine, vorzugsweise reine, Filterhilfsmittelsuspension verwendet wird.

4. Verfahren nach einem der Ansprüche 1 bis 3,
**dadurch gekennzeichnet,**
**dass** während der Reinigungsphase die Soll-Partikelschicht von dem Sieb (16) mittels einer pulsartigen Strömung von Filtrat in den Suspensionsraum (11) entfernt wird.

5. Verfahren nach einem der Ansprüche 1 bis 4,
**dadurch gekennzeichnet,**
**dass** zumindest die während der Reinigungsphase entfernte Soll-Partikelschicht mittels des zumindest einen Rührglieds (13) resuspendiert wird.

6. Verfahren nach einem der Ansprüche 1 bis 5,
**dadurch gekennzeichnet,**
**dass** eine Erkennungseinrichtung (34) zumindest während der Aufbauphase eine Partikelbeladung des Filtrats erfasst und mit einer Steuerungseinrichtung (35) in Verbindung steht, wobei die Steuerungseinrichtung 35 eine Ventilanordnung (25, 26) steuert, welche das Filtrat in Abhängigkeit von der erfassten Partikelbeladung der Trüblaufleitung (28) oder der Reinfiltratleitung (27) zuführt.

7. Verfahren nach einem der Ansprüche 1 bis 6,
**dadurch gekennzeichnet,**
**dass** zumindest ein Teil des Trüblaufs aufkonzentriert und/oder der Querstromfiltration suspensionsseitig rückgeführt wird.

8. Verfahren nach einem der Ansprüche 1 bis 7,
**dadurch gekennzeichnet,**
**dass** während in zumindest einem der kammerartigen Module die Reinigungsphase durchgeführt wird, in zumindest einem weiteren kammerartigen Modul der Differenzdruck zwischen dem Suspensionsraum (11) und dem Filtratraum (12) aufrechterhalten und Reinfiltrat gewonnen wird.

## Claims

1. Method for separating a suspension by means of a cross flow filtration into a concentrate and a filtrate, wherein:
- the suspension is introduced into a suspension chamber (11) with a plurality of chamber-like modules (17) arranged in series, in each of which at least one annular separating element with a separating surface is provided,
- for filtration, a differential pressure is set between the suspension chamber (11) and a filtrate chamber (12), which is located on a side of the separating element facing away from the suspension chamber (11),
- filtrate which penetrates the separating element due to the existing differential pressure, is removed via a filtrate line (22),
- while the suspension remaining in the suspension chamber (11) is thickened to a concentrate, which is removed from the suspension chamber (11) via an outlet (36), and
- in each module (17) at least one agitating member (13) with radially arranged agitating elements is moved in the suspension chamber (11) in a short distance over the separating surface relative thereto, so that, for carrying out a cross flow filtration, a directed flow transversely to the separating surface is produced in a gap between the agitating member (13) and the separating surface,
**characterised in that**
- firstly a sieve (16) is used as a separating element, which has an average pore size that is larger than the average particle size of the solid in the suspension to be filtered,
- that, in a build-up phase, a cake-forming filtration is carried out, wherein a permeable target particle layer is specifically filtered and built up from the suspension at the sieve (16), which is then formed as an actual separating medium to separate particles,
- that subsequently, in a usage phase, the cross flow filtration is carried out, wherein filtrate penetrates the target particle layer built-up at the sieve (16) and is removed as pure filtrate via a pure filtrate line (27), wherein the agitating members (13) effect a removing cross flow across the filtration direction and counteract a further attaching of solids at the sieven (16),
- That, in a cleaning phase, the target particle layer is removed from the sieve (16) at certain cleaning points in time by means of flowing back filtrate from the filtrate chamber (12) through the sieve (16) in the suspension chamber (11),
- that, subsequently the target particle layer is re-built by filtration of particles from the suspension during a further build-up phase, and
- that the filtrate is removed during the build-up phase separately as turbid flow via an additional turbid flow line (28).

2. Method according to claim 1,
**characterised in that**
a filter aid is added to the suspension at least in the build-up phase of the target particle layer, which also accumulates in the target particle layer.

3. Method according to one of claims 1 or 2,
**characterised in that**,
the target particle layer is formed extensively from particles of the filter aid, wherein in the build-up phase a, preferably pure, filter aid suspension is used.

4. Method according to one of claims 1 to 3,
**characterised in that**
during the cleaning phase the target particle layer is removed from the sieve (16) by means of a pulse-like flow of filtrate into the suspension chamber (11).

5. Method according to one of claims 1 to 4,
**characterised in that**
at least the target particle layer removed during the cleaning phase is resuspended by means of the at least one agitating member (13).

6. Method according to one of claims 1 to 5,
**characterised in that**
a detection means (34) detects a particle loading of the filtrate at least during the build-up phase and is connected to a control means (35), wherein the control means (35) controls a valve assembly (25, 26), which feeds the filtrate, in dependence upon the detected particle loading, to the turbid flow line (28) or to the pure filtrate line (27).

7. Method according to one of claims 1 to 6,
**characterised in that**
at least a part of the turbid flow is concentrated and / or the cross flow filtration is returned on the suspension side.

8. Method according to one of claims 1 to 7,
**characterised in that**,
during, in at least one of the chamber-like module, the cleaning phase is carried out, the differential pressure between the suspension chamber (11) and the filtrate chamber (12) is maintained and pure filtrate is obtained in at least one further chamber-like module.

## Revendications

1. Procédé de séparation d'une suspension au moyen d'une filtration à courant transversal en un concentré et un filtrat, dans lequel :
- la suspension est introduite dans un espace de suspension (11) avec plusieurs modules (17) de type chambre agencés en série, dans chacun desquels est prévu au moins un élément de séparation annulaire avec une surface de séparation,
- pour la filtration, une pression différentielle est ajustée entre l'espace de suspension (11) et un espace de filtrat ( 12), qui se trouve sur un côté de l'élément de séparation détourné de l'espace de suspension (11),
- le filtrat, qui traverse l'élément de séparation en raison de la pression différentielle appliquée, est évacué par l'intermédiaire d'une conduite de filtrat (22),
- tandis que la suspension restant dans l'espace de suspension (11) est épaissie en un concentré, qui est évacué de l'espace de suspension (11) par l'intermédiaire d'une sortie (36), et
- dans chaque module (17), au moins un organe d'agitation (13) avec des éléments d'agitation agencés radialement est déplacé dans l'espace de suspension (11) à une faible distance au-dessus de la surface de séparation par rapport à celle-ci, de telle sorte que, pour réaliser une filtration à courant transversal dans un interstice entre l'organe d'agitation (13) et la surface de séparation, un courant orienté est généré transversalement à la surface de séparation,
**caractérisé en ce qu'**
- en tant qu'élément de séparation un tamis (16) est tout d'abord utilisé, qui présente une taille de pores moyenne, qui est supérieure à la taille de particules moyenne de la matière solide dans la suspension à filtrer,
- **en ce que**, dans une phase de constitution, une filtration formant un gâteau est effectuée, une couche de particules de consigne perméable étant filtrée et constituée de manière ciblée à partir de la suspension sur le tamis (16), qui est ensuite réalisée en tant que milieu de séparation proprement dit pour la séparation de particules,
- **en ce qu'**ensuite, dans une phase d'utilisation, la filtration à courant transversal est effectuée, le filtrat traversant la couche de particules de consigne constituée sur le tamis (16) et étant évacué en tant que filtrat pur par l'intermédiaire d'une conduite de filtrat pur (27) ; au moyen des organes d'agitation (13), un courant transversal d'enlèvement étant provoqué transversalement à la direction de filtration et un dépôt supplémentaire de matière solide sur le tamis (16) étant contré,
- **en ce que** la couche de particules de consigne est retirée du tamis (16) à des instants de nettoyage déterminés dans une phase de nettoyage, dans laquelle le filtrat est ramené de l'espace de filtration (12) à travers le tamis (16) dans l'espace de suspension (11),
- **en ce que** la couche de particules de consigne est ensuite reconstituée par filtration de particules provenant de la suspension pendant une autre phase de reconstitution et
- **en ce que** le filtrat est évacué séparément pendant la phase de constitution sous forme d'écoulement trouble par l'intermédiaire d'une conduite d'écoulement trouble (28) supplémentaire.

2. Procédé selon la revendication 1,
**caractérisé en ce qu'**
au moins dans la phase de constitution de la couche de particules de consigne, un adjuvant de filtration est ajouté à la suspension, qui est cointégré dans la couche de particules de consigne.

3. Procédé selon l'une quelconque des revendications 1 ou 2,
**caractérisé en ce que**
la couche de particules de consigne est constituée en grande partie à partir de particules de l'adjuvant de filtration, une suspension d'adjuvant de filtration, de préférence pure, étant utilisée dans la phase de constitution.

4. Procédé selon l'une quelconque des revendications 1 à 3,
**caractérisé en ce que**,
pendant la phase de nettoyage, la couche de particules de consigne est retirée du tamis (16) au moyen d'un courant pulsé de filtrat dans l'espace de suspension (11).

5. Procédé selon l'une quelconque des revendications 1 à 4,
**caractérisé en ce qu'**
au moins la couche de particules de consigne retirée pendant la phase de nettoyage est remise en suspension au moyen de l'au moins un organe d'agitation (13).

6. Procédé selon l'une quelconque des revendications 1 à 5,
**caractérisé en ce qu'**
un appareil d'identification (34) détecte, au moins pendant la phase de constitution, une charge en particules du filtrat et est en liaison avec un appareil de commande (35), l'appareil de commande (35) commandant un agencement de soupape (25, 26) qui amène le filtrat à la conduite d'écoulement trouble (28) ou à la conduite de filtrat pur (27) en fonction de la charge en particules détectée.

7. Procédé selon l'une quelconque des revendications 1 à 6,
**caractérisé en ce qu'**
au moins une partie de l'écoulement trouble est concentrée et/ou recyclée dans la filtration à courant transversal côté suspension.

8. Procédé selon l'une quelconque des revendications 1 à 7,
**caractérisé en ce que**,
pendant que la phase de nettoyage est effectuée dans au moins l'un des modules de type chambre, la pression différentielle entre l'espace de suspension (11) et l'espace de filtrat (12) est maintenue dans au moins un autre module de type chambre et un filtrat pur est obtenu.
